# EUROPEAN PATENT APPLICATION

(11) **EP 1 516 594 A1**
(43) Date of publication of application: **23.03.2005**
(21) Application number: 03388062.6
(22) Date of filing: 18.09.2003
(51) Int. Cl.: A61C 17/06, A61C 1/00

(54) **A unitary portable power suction system for dental use**

(71) Applicant: Dentalman A/S, 2600 Glostrup (DK)
(72) Inventor: Nielsen, Christian Nodskov Duus, 3520 Farum (DK)
(74) Representative: Nielsen, Henrik Sten

(57) **Abstract**

A unitary portable power suction system for dental use comprises a housing, a power supply mounted in the housing and a vacuum pump for creating a suction flow of preferably 1250 l/min, and creates a pressure of preferably 150 mbar. The vacuum pump has a vacuum pump inlet and a vacuum pump outlet and is mounted in the housing and connected to and powered by the power supply. The unitary power suction system also comprises a cyclone separator for separating fluids from the suction flow and has a cyclone separator inlet and a cyclone separator outlet. The cyclone separator inlet constitutes a system air inlet and the cyclone separator outlet is in fluid communication with the vacuum pump inlet. The unitary power suction system further comprises a filter means for removing particles. The filter means is mounted in the housing and has a filter outlet and a filter inlet. The filter inlet is in fluid communication with the vacuum pump outlet for receiving the suction flow, and the filter outlet constitutes a system air outlet. The filter means and the cycle separator create a pressure loss such that the pressure at the system air inlet does not exceed 50-70 mbar, and the air flow at the system air inlet is at least 200-400 l/min.

## Description

The present invention relates to portable dental apparatuses suitable for removing saliva and other fluids by suction during dental procedures.

Examples of related dental apparatuses for removing saliva and other fluids are described in the following publications: US 4,286,949, US 6,217,328, US 5,211,558, US 3,081,542, US 5,655,905, US 4,373,699, US 6,022,326, US 5,741,397, US 2001/0004060, US 5,017,135, EP 0 498 782, EP 1 074 226, WO 99/20197, JP publication no. 2001-293008, all of which are hereby incorporated in the present specification by reference.

The portable dental suction apparatuses enables a visiting dentist to perform dental procedures in places such as nursing homes, hospital emergency rooms or other places with or without a mains power supply, also organisations such as the Red Cross, military or missionaries at operating in remote locations. Other uses may include suction for avoiding suffocation or constriction of people in car crashes or other accidents.

When designing dental apparatuses for removing saliva and other fluids found in the oral cavity during dental procedures, the requirements for the apparatus are a high airflow and a low air pressure in order to avoid causing injuries to the patient during the procedure. Empirically it has been realised that an air pressure of no more than approx. 50 millibar is best suited for saliva suction equipment, an air pressure higher than 50 millibar is known to have caused injuries to the gingiva. The creation of a high airflow is usually followed by an equally high pressure. The present invention seeks to provide a solution wherein a combination of a high airflow and a low air pressure is present.

The present invention provides a vacuum pump creating a high airflow and also a relatively high air pressure, however it has been realised that combining a vacuum pump creating a high airflow and a high pressure combined with an appropriate filter and a cyclone separator it is possible to create a suction device with a high airflow and an air pressure below 50 millibar, thereby enabling a dentist or surgeon to safely remove saliva, water and other fluids from the oral cavity of a patient.

According to the teachings of the present invention a unitary portable power suction system for dental use comprises:
- a housing,
- a power supply mounted in the housing,
- a vacuum pump for creating a suction flow of 200 I/min. to 2000 I/min., such as 300 I/min. to 1800 I/min., such as 500 I/min. to 1700 I/min., such as 750 I/min.- 1600 I/min., such as 900 I/min. to 1400 I/min., such as 1100 I/min. to 1300 I/min., such as 150 I/min. to 300 I/min., such as 300 I/min. to 500 I/min., such as 500 I/min. to 750 I/min., such as 750 I/min. to 900 I/min., such as 900 I/min. to 1100 I/min., such as 1300 I/min. to 1400 I/min., such as 1400 I/min. to 1600 I/min., such as 1600 I/min. to 1800 I/min., such as 1800 I/min, to 2000 I/min., preferably 1250 I/min, and creating a pressure of 100 mbar to 300 mbar, such as 120 mbar to 260 mbar, such as 130 mbar to 220 mbar, such as 140 mbar to 190 mbar, such as 145 mbar to 160 mbar, such as 149 mbar to 155 mbar, such as 150 to 155 mbar, alternatively 100 mbar to 140 mbar, such as 140 mbar to 160 mbar, such as 160 mbar to 180 mbar, such as 180 mbar to 200 mbar, such as 200 mbar to 220 mbar, such as 220 mbar to 240 mbar, such as 240 mbar to 260 mbar, such as 260 mbar to 280 mbar, such as 280 mbar to 300 mbar, preferably 150 mbar, the vacuum pump having a vacuum pump inlet and a vacuum pump outlet, the vacuum pump mounted in the housing and being connected to and powered by the power supply,
- a cyclone separator for separating fluids from the suction flow, the cyclone separator having a cyclone separator inlet and a cyclone separator outlet, the cyclone separator inlet constituting a system air inlet, the cyclone separator outlet being in fluid communication with the vacuum pump inlet,
- a filter means for removing particles, the filter means mounted in the housing, the filter means having a filter outlet and a filter inlet, the filter inlet being in fluid communication with the vacuum pump outlet for receiving the suction flow, the filter outlet constituting a system air outlet, and
the filter means and the cycle separator creating a pressure loss such that the pressure at the system air inlet does not exceed 50-70 mbar such as 50-55 mbar, 55-60 mbar, 60-65 mbar, 65-70 mbar or 50-60 mbar, preferably approximately 50 mbar and the air flow at the system air inlet is at least 200-400 I/min., such as 200-250 I/min., 250-300 I/min., 300-350 I/min., 350-400 I/min., preferably approximately 350 I/min..

It has been realised empirically that the air pressure at the system air inlet must not exceed 50 mbar, otherwise there is a risk the injury to the patient undergoing dental treatment, e.g. damage to the oral cavity, may occur. However a high air flow is required to perform some dental operations.

According to a first feature of the present invention the power supply may be a battery power supply or a mains power supply or a combination thereof. The present invention seeks to provide a high power suction unit that is preferably portable or mobile, and as such should be able to function in an environment without immediate access to a mains supply, however when performing dental treatment near a mains supply, a longer period of operation is attainable by supplying power from a mains supply, also the power supply should be connectable to any mains supply, e.g. 230 VAC, 50 Hz and 110 VAC, 60Hz.

According to a second feature of the present invention the cyclone separator may be included in the housing. Depending on the size requirement of the power suction unit the separator may be included in the housing.

According to a third feature of the present invention the cyclone separator constitutes a separate component to be mounted exterior relative to the housing and has a tube for establishing the fluid communication with the vacuum pump inlet.

According to a fourth feature of the present invention the housing has a housing air inlet and a housing air outlet, the housing air inlet being constituted by the vacuum pump inlet, and the housing outlet being constituted by the filter outlet. The filter outputs the air from the power suction unit into the surrounding environment.

According to a fifth feature of the present invention the filter means is constituted by a HEPA filter element separating particles including bacteria, such as legionella bacteria, having a size in excess of 8-16 µm. The size of the particles allowed to pass through the filter may be varied by varying the mesh of the filter, but when doing so it is necessary to contemplate the impact on the over-all pressure drop of the system. Since the filter outputs the air from the power suction unit into the surrounding environment the filter should be able to remove particles such as bacteria. Also the filter may remove particles causing smell or odour inconveniences.

According to a sixth feature of the present invention the filter means is a replaceable filter means, preferably a disposable filter means. The filter means may at some point be filled with particles removed from the air flow and need replacement or alternatively cleaning.

According to a seventh feature of the present invention the vacuum pump includes a motor housing and a rotor having at least 4 blades, such as 4-8, 8-10, 10-12, 12-16, preferably 6 or 8, the rotor being received in the motor housing in a low-leak fitting.

In the present context, the term low-leak fitting defines a rotary pump having the capability of creating a substantial load-independent suction pressure and may be accomplished by the provision of a rotary pump having at the air outlet of the pump a low axial and a low radial clearance between the rotor and the motor housing such as a clearance in the order of 5-10/100 mm. By the low axial and radial clearance between the rotor and the motor housing, the high volume and high pressure pump may be provided even with a fairly low number of rotor blades such as six or eight rotor blades.

According to an eight feature of the present invention further comprises a liquid receptor to be connected to the cyclone separator for receiving liquid separated from the air flow by means of the cyclone separator. The liquid receptor may have a valve or the like for emptying the contents when needed.

According to a ninth feature of the present invention the liquid receptor is detachable from the cyclone separator.

The present invention will now be further described in detail with reference to the drawings in which
Fig. 1 is an exploded view of the power suction assembly,
Fig. 2 is an exploded view of some of the parts of the power suction unit of Fig. 1,
Fig. 3 is a second exploded view of the power suction assembly of Fig. 1,
Fig. 4 is an exploded view of the vacuum pump,
Fig. 5 and 6 are schematic diagrams illustrating electrical circuits of the power suction sysmtem.

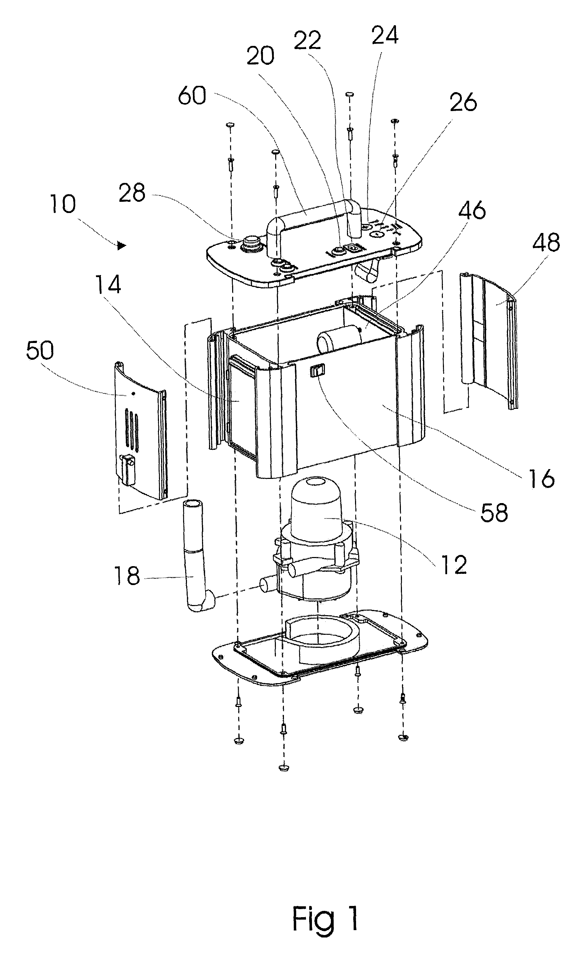

In Fig. 1, an exploded view of the power suction unit designated the reference numeral 10 in its entirety is shown. The power suction unit 10 comprises a main pump, such as a vacuum pump for the creation of a suction flow. The vacuum pump 12 needs to create a high suction flow in the presently preferred embodiment. The vacuum pump 12 delivers a suction flow of approximately 1250 litres per minute at a pressure of 150 millibar. However, this pressure is much too powerful for dental use, since a vacuum of this magnitude would probably lead to lesions in the oral cavity of the patient exposed to a suction of this magnitude.

A filter 14 is mounted in the housing 16 and received air outputted from the vacuum pump 12. The filter 14 is adapted for removing dry particles such as bacteria from the airflow prior to the release of the air into the surrounding environment. The filter 14 is preferably dimensioned to obtaining a pressure crop of approximately 100 millibar. Attaching a hand piece via a hose to the tube 18 enables a dentist to remove fluids and possibly solid waste elements such as saliva and particles found naturally in the mouth including bacteria, particles of food and dental plague and possibly materials used by the dentist for polishing or cleaning teeth.

Atop the housing 16, power inlets 20, 22 are placed for connection to external power sources such as car batteries, e.g. via the cigarette lighter outlet or aother DC outlet of a car having 12V, 24V or 48V battery supply, or via 22 to a mains power supply feeding the power suction unit 10 with AC power, e.g. 110 VAC, 60 Hz, or 230 VAC, 50 Hz. The housing further comprises switches or buttons 24, 26 for operating the power suction unit 10. The buttons 24, 26 may be used for controlling the level of the airflow through the power suction unit 10.

The housing 16 includes an aperture 28 connected to the tube 18, where the aperture 28 constitutes the air inlet of the power suction unit 10. The filter 14 constitutes the air outlet of the power section unit 10. In the presently preferred embodiment of the present invention, the filter 14 is a HEPA filter filtering particles such as bacteria from the air emitted by the vacuum pump 12. The HEPA filter has a mesh size of 8-16 µm and is thereby able to remove the bacteria collected by the dentist using the power suction unit 10.

The filter 14 is preferably a replaceable filter and access to the filter is obtained by removing the end closure or end shield 50. In the presently preferred embodiment of the present invention, the end closure 50 may be detached from the housing by sliding the end closure 50 upwards or downwards. In an alternative embodiment of the present invention, the end closure 50 may be fastened on either side top or bottom by hinges or the like, thereby enabling the dentist or possibly a service technician to replace the filter 14 by opening the end closure 50 in a manner similar to opening a door.

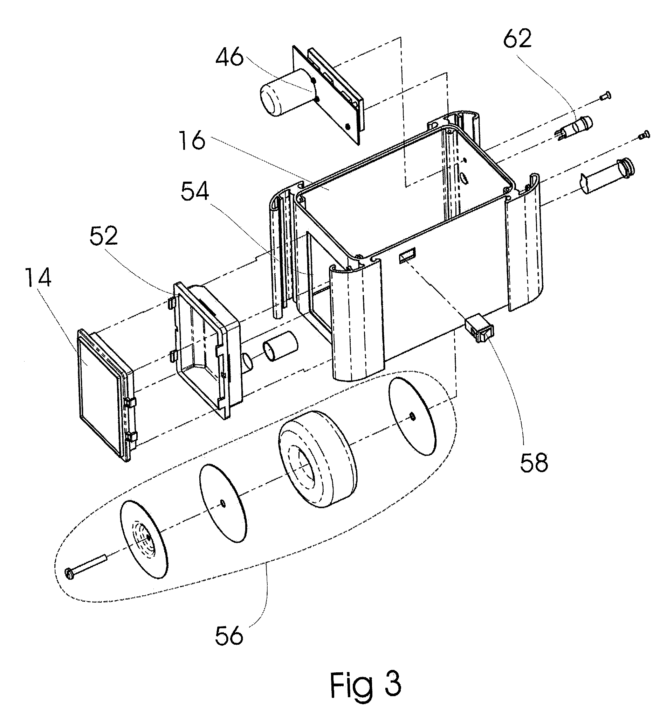

In a preferred embodiment of the present invention as shown in Fig. 3, the end closure 48 placed opposite the end closure 50 may also be opened or removed in a manner similar to that of the end closure 50. Opening the end closure 48 may enable a dentist or service technician to obtain access to fuses 62.

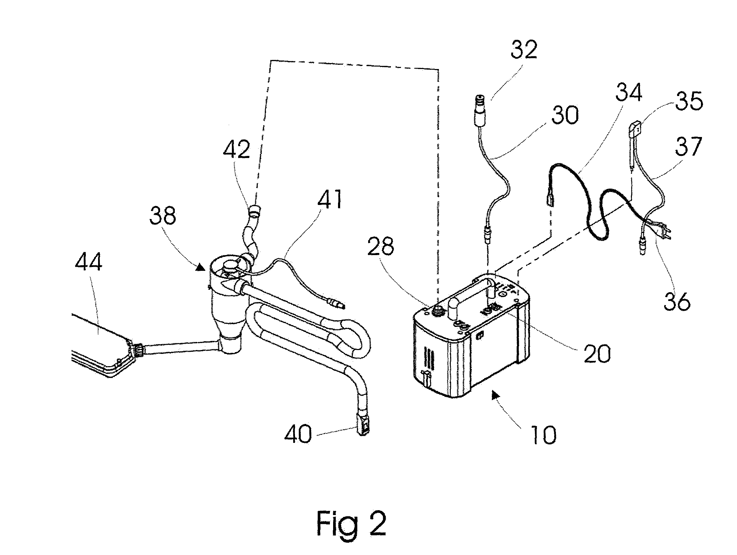

Fig. 2 is a schematic view of the power suction unit 10 and a number of peripherals e.g. a power cord 30 having a connector 32 for connecting the power cord 30 to a car battery, such as a 12V, 24V or 48V battery, via the cigarette lighter output or other DC outlet. The power cord 30 is connected to the power inlet 20, which in turn is connected to a power supply unit mounted inside the power suction unit 10. Another power cord 34 may be used to power the power supply in the power suction unit 10 from a power source such as 110 VAC, 60 Hz, or 230 VAC, 50 Hz. The power cord 34 may have a fixed connector 36 capable of connecting to a specific outlet design used in a specific country. Alternatively, the connector 36 may be detachable and a number of connectors may be supplied with the power suction unit 10 enabling a user to connect the power suction unit 10 to any type of socket in the world. Further alternatively, the power suction unit 10 may be powered by a battery. The battery is preferably rechargeable and may include or be connectable to a solar cell system or a mains supply for recharging the battery.

A separator 38 having an inlet 40, and outlet 42, and a fluid collecting reservoir 44 are connected to the aperture 28 of the power suction unit 10. The inlet 40 receives air from dental equipment such as a suction unit operated by a dentist. The separator 38 separates fluids such as saliva and/or other fluids including blood, solid particles etc., from the air flow received through the inlet 40, by separating the fluids into the fluid collecting reservoir 44 and passing the air through the outlet 42 into the power suction unit 10. In an alternative embodiment of the present invention the separator 38, the inlet 40, the outlet 42 and/or the collecting reservoir 44 may be built in or incorporated into the housing 16 of the power suction unit 10, alternatively any combination thereof.

The separator 38 is further provided with an electrical conductivity measuring circuitry included in the housing of the separator. The circuitry serves the purpose of detecting the presence of air/liquid in the separator and to supply an electrical signal representing the presence of liquid rather than air exclusively in the separator to the power suction unit 10 through an electric cord 41. By the presence of an electrical signal indicating air within the separator 38 exclusively, the power suction unit 10 is turned off. The presence of liquid in the separator which causes an increase in the conductivity through the separator is detected by the electrical conductivity monitoring circuitry and results in the supply of an electrical signal in the cord 41 to the power suction unit 10, instruction the power suction unit 10 to turn on.

In the upper right hand corner of Fig. 2, a handle 35 for the support of a suction device is shown which handle like the separator 38 is provided with an internal electrical conductivity monitoring or measuring circuitry for the supply of an electrical signal representing the presence of liquid or air to the power suction unit 10 through an electric cord 37. No detailed description of the conductivity measuring circuitry is presented in this context as the measurement of electrical conductivity in liquid/air is well known in the art and may be based on AC or DC measuring techniques or pulse DC measuring technique.

In the presently preferred embodiment of the present invention the separator 38, the collecting reservoir 44 and the power suction unit 10 may be placed in a container such as a suitcase-like container for easier transportation of the aggregated system. Also the suitcase may comprise a battery for powering the power suction unit 10 and possibly the separator 38.

The vacuum pump 12 may be constituted by a rotor blade wheel or the like encased in a closely fitting housing for obtaining the required air pressure.

The collecting reservoir 44 may be fitted with a valve or tap for emptying the collecting reservoir 44 when the reservoir is near its maximum capacity. The collecting reservoir 44 may include sensors for alerting the dentist or operator when the collecting reservoir 44 is near a specific level such as when the reservoir is at least 75% filled, preferably when the reservoir is 90% filled. The collecting reservoir 44 may then signal the dentist or operator either with an audible alarm or a visual indication such as by lighting a light-emitting diode (led) or lamp, alternatively a combination of these.

In Fig. 3, a second exploded view of the power suction unit 10 is shown. The filter 14 is mounted in a filter box 52 for easy fixation in an aperture 54 of the housing 16. The power supply 46 is shown detached from the inside of the housing 16 and is preferably mounted opposite the filter 14. A transformer constituted by the elements shown inside the dotted line 56 is also mounted inside the housing 16 in the end opposite the filter. Also included in the housing 16 a main power switch 58 having a button on the outside of the housing 16 for turning on or switching off the power to the power suction unit 10.

The placement of the power supply 46 as show in Fig. 1, the transformer and the vacuum 12 is chosen for distributing the weight within the housing 16 in a way such that a person carrying the power suction unit 10 by lifting the handle 60 does not feel discomfort when carrying the power suction unit 10.

In the presently preferred embodiment of the present invention the separator 38 and the power suction unit 10 includes resistive conductivity measurement devices for the registration of presence of water or air, in the case of air exclusively the apparatus is turned off.

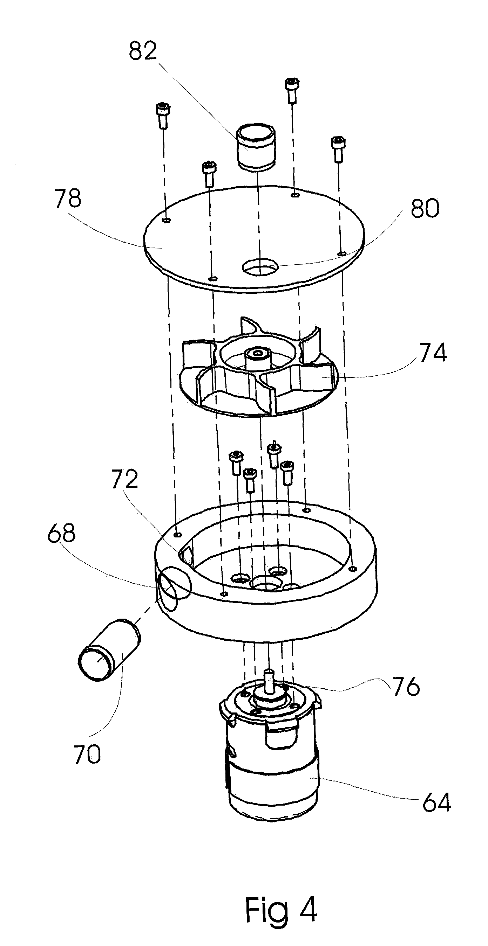

In Fig. 4, an exploded view of the vacuum pump 12 is shown. The vacuum pump 12 in the presently preferred embodiment of the present invention includes an electric motor 64 mounted on a housing 66. The housing 66 includes an aperture 68 for receiving a connecting piece 70 for outputting air from the vacuum pump 12. In close proximity of the aperture 68, a projecting wall bead 72 extends from the inside of the housing towards a blade wheel 74, thereby creating a narrow gap between the wall and the blade wheel 74 in the order of 5-10/100 mm radially and axially. The narrow gap between the housing wall and the blade wheel 74 constitutes the low leek required to obtaining a high air flow and a high air pressure.

The blade wheel 74 is engaged by a rotary shaft 76 from the electric motor 64. The blade wheel 74 is enclosed in the housing 66 by a lid 78, which includes an aperture 80 adapted for receiving a connecting piece 82 for letting air into the vacuum pump 12. The lid 78 is preferably slightly angled or tilted having its lower point near the aperture 68, thereby obtaining a compression of the air.

A prototype version of the present invention has been constructed and has obtained an airflow at the system inlet of 420 I/min. and having an air pressure of 53 millibar.

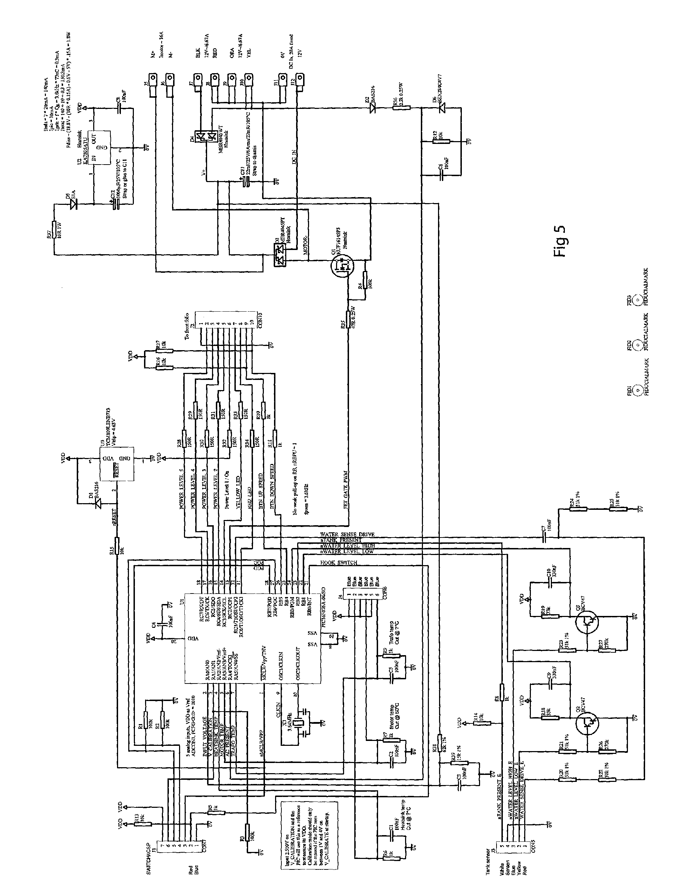

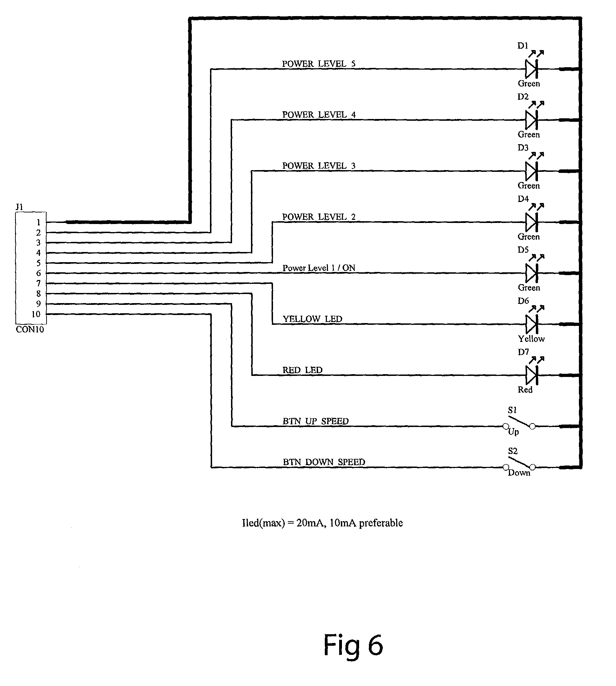

Fig. 5 and 6 are schematic diagrams illustrating electrical circuits of the power suction system, the figures are self-explanatory and no detailed description is provided presently.

## Claims

1. A unitary portable power suction system for dental use comprising:
- a housing,
- a power supply mounted in said housing,
- a vacuum pump for creating a suction flow of 200 I/min. to 2000 I/min., such as 300 I/min. to 1800 I/min., such as 500 I/min. to 1700 I/min., such as 750 I/min. - 1600 I/min., such as 900 I/min. to 1400 I/min., such as 1100 I/min. to 1300 I/min., such as 150 I/min. to 300 I/min., such as 300 I/min. to 500 I/min., such as 500 I/min. to 750 I/min., such as 750 I/min. to 900 I/min., such as 900 I/min. to 1100 I/min., such as 1300 I/min. to 1400 I/min., such as 1400 I/min. to 1600 I/min., such as 1600 I/min. to 1800 I/min., such as 1800 I/min. to 2000 I/min., preferably 1250 I/min, and creating a pressure of 100 mbar to 300 mbar, such as 120 mbar to 260 mbar, such as 130 mbar to 220 mbar, such as 140 mbar to 190 mbar, such as 145 mbar to 160 mbar, such as 149 mbar to 155 mbar, such as 150 to 155 mbar, alternatively 100 mbar to 140 mbar, such as 140 mbar to 160 mbar, such as 160 mbar to 180 mbar, such as 180 mbar to 200 mbar, such as 200 mbar to 220 mbar, such as 220 mbar to 240 mbar, such as 240 mbar to 260 mbar, such as 260 mbar to 280 mbar, such as 280 mbar to 300 mbar, preferably 150 mbar, said vacuum pump having a vacuum pump inlet and a vacuum pump outlet, said vacuum pump mounted in said housing and being connected to and powered by said power supply,
- a cyclone separator for separating fluids from said suction flow, said cyclone separator having a cyclone separator inlet and a cyclone separator outlet, said cyclone separator inlet constituting a system air inlet, said cyclone separator outlet being in fluid communication with said vacuum pump inlet,
- a filter means for removing particles, said filter means mounted in said housing, said filter means having a filter outlet and a filter inlet, said filter inlet being in fluid communication with said vacuum pump outlet for receiving said suction flow, said filter outlet constituting a system air outlet, and
said filter means and said cycle separator creating a pressure loss such that the pressure at said system air inlet does not exceed 50-70 mbar such as 50-55 mbar, 55-60 mbar, 60-65 mbar, 65-70 mbar or 50-60 mbar, preferably approximately 50 mbar and the air flow at said system air inlet is at least 200-400 I/min., such as 200-250 I/min., 250-300 I/min., 300-350 I/min., 350-400 I/min., preferably approximately 350 I/min..

2. The unitary portable power suction system according to claim 1, said power supply being a battery power supply or a mains power supply or a combination thereof.

3. The unitary portable power suction system according to any of the claims 1 or 2, said cyclone separator being included in said housing.

4. The unitary portable power suction system according to any of the claims 1 or 2, said cyclone separator constituting a separate component to be mounted exterior relative to said housing and having a tube for establishing said fluid communication with said vacuum pump inlet.

5. The unitary portable power suction system according to claims 4, said housing having a housing air inlet and a housing air outlet, said housing air inlet being constituted by said vacuum pump inlet, and said housing outlet being constituted by said filter outlet.

6. The unitary portable power suction system according to any of the claims 1-5, said filter means being constituted by a HEPA filter element separating particles including bacteria having a size in excess of 8-16 µm.

7. The unitary portable power suction system according to any of the claims 1-6, said filter means being a replaceable filter means, preferably a disposable filter means.

8. The unitary portable power suction system according to any of the claims 1-7, said vacuum pump including a motor housing and a rotor having at least 4 blades, such as 4-8, 8-10, 10-12, 12-16, preferably 6 or 8, said rotor being received in said motor housing in a low-leak fitting.

9. The unitary portable power suction system according to any of the claims 1-8, further comprising a liquid receptor to be connected to said cyclone separator for receiving liquid separated from said air flow by means of said cyclone separator.

10. The unitary portable power suction system according to claim 9, said liquid receptor being detachable from said cyclone separator.
